Europäisches Patentamt

European Patent Office

Office européen des brevets

(11) Veröffentlichungsnummer: **0 406 721 A2**

# EUROPÄISCHE PATENTANMELDUNG

(21) Anmeldenummer: 90112456.0

(22) Anmeldetag: 29.06.90

(51) Int. Cl.⁵: **H04R 25/00**, H05K 5/00, H01M 2/02

(30) Priorität: 01.07.89 DE 3921674

(43) Veröffentlichungstag der Anmeldung:
09.01.91 Patentblatt 91/02

(84) Benannte Vertragsstaaten:
AT BE CH DK ES FR GB LI LU NL SE

(71) Anmelder: RALSTON ENERGY SYSTEMS
DEUTSCHLAND GmbH
Max-Planck-Strasse 30
D-4006 Erkrath(DE)

(72) Erfinder: Thielmann, Walter R.
Am Bonneshof 16
4000 Düsseldorf 30(DE)

(74) Vertreter: König, Reimar, Dr.-Ing. et al
Patentanwälte Dr.-Ing. Reimar König
Dipl.-Ing. Klaus Bergen Wilhelm-Tell-Strasse
14 Postfach 260162
D-4000 Düsseldorf 1(DE)

(54) Vorratsbehälter für Knopfbatterien.

(57) Vorratsbehälter (1) für Knopfbatterien (2) mit mindestens einem, dem Batteriequerschnitt angepaßten, einen Eingang (4) und einen Ausgang (5) aufweisenden Kanal (3), einem im Kanal (3) angeordneten, gegen Herausschieben durch Anschläge (7, 8) am Eingang (4) und am Ausgang (5) gesicherten Schieber (6) und ein Durchschieben von Knopfbatterien (2) nur in der Ausgangsrichtung gestattenden Sperren (9, 10). Der Vorratsbehälter (1) dient zur Aufnahme von frischen und verbrauchten Knopfbatterien (2), die sich nur in den Eingang (4) hineinschieben lassen, so daß gleichzeitig eine frische Knopfbatterie (2) am Ausgang (5) austritt. Wenn alle frischen Knopfbatterien (2) verbraucht sind und der Vorratsbehälter (1) mit verbrauchten Knopfbatterien (2) gefüllt ist, sind diese so blockiert, daß sich keine weiteren Knopfbatterien (2) einschieben lassen.

Fig. 1

EP 0 406 721 A2

## VORRATSBEHÄLTER FÜR KNOPFBATTERIEN

Die Erfindung betrifft einen Vorratsbehälter für Knopfbatterien, insbesondere für Hörgerätebatterien.

Es gibt heute auf dem Markt eine Vielzahl von Knopfzellen unterschiedlicher Größe, chemischer Systeme und Kapazitäten. So werden z.B. Silberoxidzellen ausschließlich in Armbanduhren verwendet, Alkali-Mangan-Knopfzellen für Taschenrechner und -computerspiele. In Fotoapparaten finden Quecksilber- und Silberoxid-Batterien unterschiedlicher Größe Verwendung. Die neue Generation der Hörgeräte benutzt vier unterschiedliche Größen von Quecksilber-Batterien. Hörgeräte-Batterien werden speziell für diesen Zweck produziert, da sie sehr viel Strom brauchen.

Fällt ein Taschenrechner einmal aus oder bleibt eine Uhr stehen, weil die Batterie entladen ist, ergeben sich zumeist keine Probleme. Auf ein Hörgerät angewiesene Personen sind jedoch erheblich behindert, wenn ihr Hörgerät wegen Entladung der Batterie ausfällt. Besonders für Benutzer von Hörgeräten ist es daher vorteilhaft, mindestens eine Ersatzbatterie bei sich zu tragen. Da zudem Knopfbatterien, insbesondere Hörgerätebatterien, Quecksilber enthalten, dürfen verbrauchte Batterien nicht in den Müll wandern, sondern müssen zu der Verkaufsstelle zurück gebracht werden. Ein zelne verbrauchte Knopfbatterien können jedoch leicht verloren gehen und stellen allein schon dadurch eine Umweltgefahr dar.

Der Erfindung liegt die Aufgabe zugrunde, einen Vorratsbehälter für Knopfbatterien zu schaffen, mit dem sich auf einfache Weise mehrere Knopfbatterien bevorraten lassen, und der gleichzeitig zur Aufnahme verbrauchter Knopfbatterien geeignet ist, so daß nach Entnahme der frischen Knopfbatterien und Einfüllen einer entsprechenden Anzahl verbrauchter Knopfbatterien eine Rückgabe an den Händler oder eine Sammelstelle auf einfache Weise möglich ist.

Diese Aufgabe wird erfindungsgemäß durch einen Vorratsbehälter mit mindestens einem, dem Querschnitt der Knopfbatterien angepaßten, einen Eingang und einen Ausgang aufweisenden Kanal und ein Durchschieben von Knopfbatterien nur in Ausgangsrichtung gestattenden Sperren gelöst. Des weiteren kann der Vorratsbehälter einen im Kanal angeordneten, gegen Herausschieben durch Anschläge am Eingang und am Ausgang gesicherten Schieber aufweisen.

Im Kanal lassen sich mehrere, beispielsweise sechs frische Knopfbatterien anordnen, die einzeln dadurch entnommen werden, daß in den Eingang eine verbrauchte Knopfbatterie hineingeschoben wird. Durch dieses Hineinschieben einer verbrauchten Knopfbatterie werden die frischen Knopfbatterien und gegebenenfalls auch der Schieber um ein den Batteriedurchmesser entsprechendes Stück weitergeschoben, so daß eine frische Knopfbatterie aus dem Ausgang des Kanals austritt. Die Sperre am Eingang des Kanals verhindert ein Zurückschieben der Knopfbatterien und auch, daß eine verbrauchte Knopfbatterie irrtümlicherweise in den Ausgang des Kanals hineingeschoben wird. Wenn die letzte frische Knopfbatterie den Kanal verlassen hat, und der Kanal vom Schieber bis zum Eingang mit verbrauchten Knopfbatterien gefüllt ist, liegt der Schieber an einem entsprechenden Anschlag im Bereich des Kanalausgangs an und verhindert dadurch, daß weitere verbrauchte Knopfbatterien in den Kanal hineingeschoben werden.

Der Benutzer kann daher beim Entnehmen von frischen und beim Einschieben von verbrauchten Knopfbatterien keinen Fehler begehen und weiß sofort, wenn sämtliche frischen Knopfbatterien verbraucht sind und der Vorratsbehälter mit verbrauchten Knopfbatterien gefüllt ist.

Der Vorratsbehälter kann einen geraden oder einen U-förmig gebogenen Kanal für die Knopfbatterien aufweisen, und die Aufnahmekapazität für frische und verbrauchte Knopfbatterien läßt sich dadurch erhöhen, daß mindestens zwei Kanäle parallel zueinander angeordnet werden.

Vorteilhafterweise kann der Schieber in entsprechende Führungen im Kanal eingreifende Vorsprünge aufweisen, und die Führungen können am Eingang und Ausgang durch die Anschläge abgeschlossen sein, so daß sich der Schieber nur zwischen dem Anschlag am Eingang und dem Anschlag am Ausgang verschieben läßt.

Vorzugsweise bestehen die Sperren aus in den Kanal hineinragenden federnden Zungen, die, wenn der Vorratsbehälter aus Kunststoff besteht, mit diesem Material einheitlich ausgebildet sein können.

Wenn die federnden Zungen in Schieberichtung schräg nach innen in den Kanal gerichtet sind und zumindest die Zungen am Eingang des Kanals in den Seitenwänden des Kanals angeordnet und auf den Mittelpunkt der letzten eingeschobenen Knopfbatterie gerichtet sind, lassen sich die Knopfbatterien ohne großen Kraftaufwand in den Kanal hineindrücken, so daß die letzte frische Knopfbatterie am Ausgang des Kanals über die entsprechenden federnden Zungen hinausgeschoben wird, während umgekehrt ein Hineinschieben einer Knopfbatterie in den Ausgang sicher verhindert wird, da die auf den Mittelpunkt der letzten eingeschobenen Knopfbatterie gerichteten Zungen nicht ausweichen können und eine sichere Sperre bilden.

Da der erfindungsgemäße Vorratsbehälter entsprechend der Größe der Knopfbatterien klein sein kann, ist es vorteilhaft, ein Batteriespenderetui für mindestens einen Vorratsbehälter mit je einem Schieberverschluß für den Eingang und den Ausgang eines jeden Vorratsbehälters zu versehen. Ein solches Batteriespenderetui läßt sich beschriften und leichter aufbewahren als die kleinen Vorratsbehälter. Besonders vorteilhaft ist es, wenn das Batteriespenderetui mit einer Klappe an einer der großen Oberflächen zum Einlegen eines Vorratsbehälters mit U-förmig gebogenem Kanal und einem den Eingang und den Ausgang des Kanals gleichzeitig freigebenden oder verschließenden Schieberverschluß versehen ist. Auf diese Weise läßt sich das Batteriespenderetui mit einem Handgriff öffnen. Die Einschuböffnung für verbrauchte Knopfbatterien und die Austrittsöffnung für eine frische Knopfbatterie lassen sich eindeutig kennzeichnen, und der Vorratsbehälter läßt sich auf einfache Weise wie eine Kassette aus dem Batteriespenderetui entnehmen oder hineinlegen.

Durch zwei umlaufende Schlitze im Voratsbehälter, besteht weiterhin die Möglichkeit, die Batterien einzeln zu testen, ohne sie aus der Verpackung entnehmen zu müssen.

Die Erfindung wird nachstehend anhand mehrerer in der Zeichnung dargestellter Ausführungsbeispiele des näheren erläutert. In der Zeichnung zeigen:

Fig. 1 einen Schnitt durch einen Vorratsbehälter mit geradem Kanal entlang der Linie I-I in Fig. 2

Fig. 2 einen Schnitt entlang der Linie II-II in Fig. 1

Fig. 3 eine Draufsicht auf einen Vorratsbehälter mit U-förmigem Kanal

Fig. 4 einen Schnitt entlang der Linie IV-IV in Fig. 3

Fig. 5 eine Draufsicht auf einen Vorratsbehälter für kleinere Knopfbatterien und

Fig. 6 eine perspektivische Ansicht eines Batteriespenderetuis für Vorratsbehälter mit U-förmigem Kanal.

Der Vorratsbehälter 1 für sechs Knopfbatterien 2 ist mit einem rechteckigen Kanal 3 versehen, dessen Querschnitt der Kontur der Knopfbatterien 2 angepaßt ist.

Die Knopfbatterien 2 werden in einen Eingang 4 hineingeschoben und treten aus einem Ausgang 5 aus. Im Kanal 3 ist ein Schieber 6 angeordnet, der frische Knopfbatterien 2 von verbrauchten Knopfbatterien trennt. Die Bewegung des Schiebers 6 ist durch einen Anschlag 7 am Eingang 4 und einen Anschlag 8 am Ausgang 5 des Kanals 3 begrenzt. Der Schieber 6 ist mit seitlichen Vorsprüngen 11 versehen, die in entsprechenden Führungen 12 des Kanals 3 gleiten. Diese Führungen 12 werden durch die Anschläge 7, 8 abgeschlossen. Am Eingang 4 ist eine Sperre in Form von federnden Zungen 9 und am Ausgang 5 eine Sperre in Form von federnden Zungen 10 angeordnet.

Die federnden Zungen 9 ragen unter einem Winkel von etwa 45° in den Kanal 3 hinein, lassen sich jedoch durch Einschieben einer verbrauchten Knopfbatterie 2 seitlich so wegdrängen, daß sich eine Knopfbatterie in den Kanal 3 einschieben läßt. Gleichzeitig werden die frischen Knopfbatterien 2 und der Schieber 6 um ein entsprechendes Stück in Richtung Ausgang 5 verschoben, so daß die letzte, dem Ausgang 5 benachbarte Knopfbatterie 2 an den federnden Zungen 10, die entsprechend zurückweichen, vorbeigeschoben wird und aus dem Vorratsbehälter 1 austritt.

Die unter einem Winkel von 45° in den Kanal 3 hineinragenden federnden Zungen 9 bilden eine sichere Sperre gegen ein Zurückschieben der frischen Knopfbatterien 2 und des Schiebers 6 mittels einer am Ausgang 5 angesetzten verbrauchten Knopfbatterie, da sie auf den Mittelpunkt einer am Eingang eingeschobenen verbrauchten Knopfbatterie 2 gerichtet sind und daher auch unter dem größten Druck nicht ausweichen können.

Mehrere gerade Kanäle 3 lassen sich in einem Vorratsbehälter 1 parallel zueinander anordnen, wodurch sich die Aufnahmekapazität des Vorratsbehälters beträchtlich erhöhen läßt.

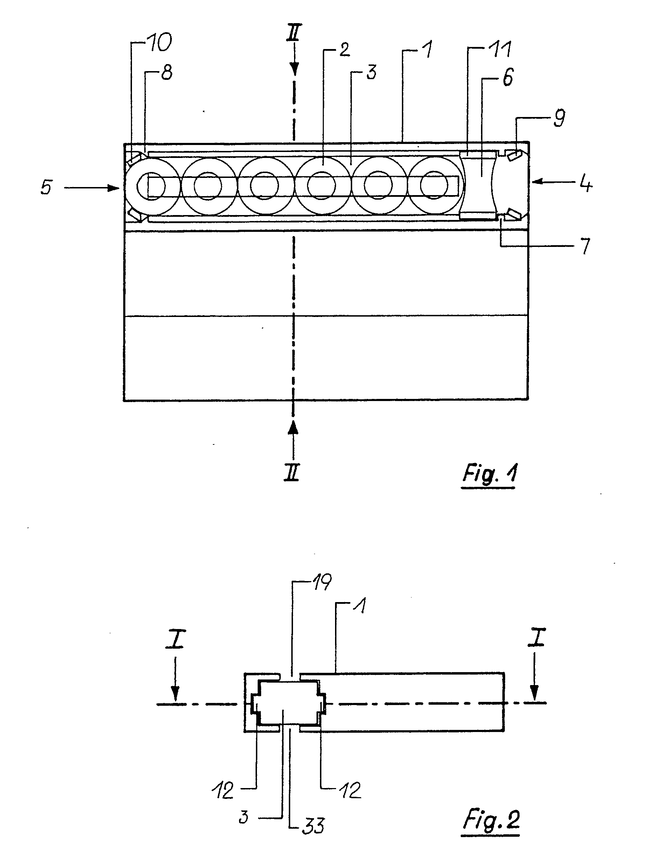

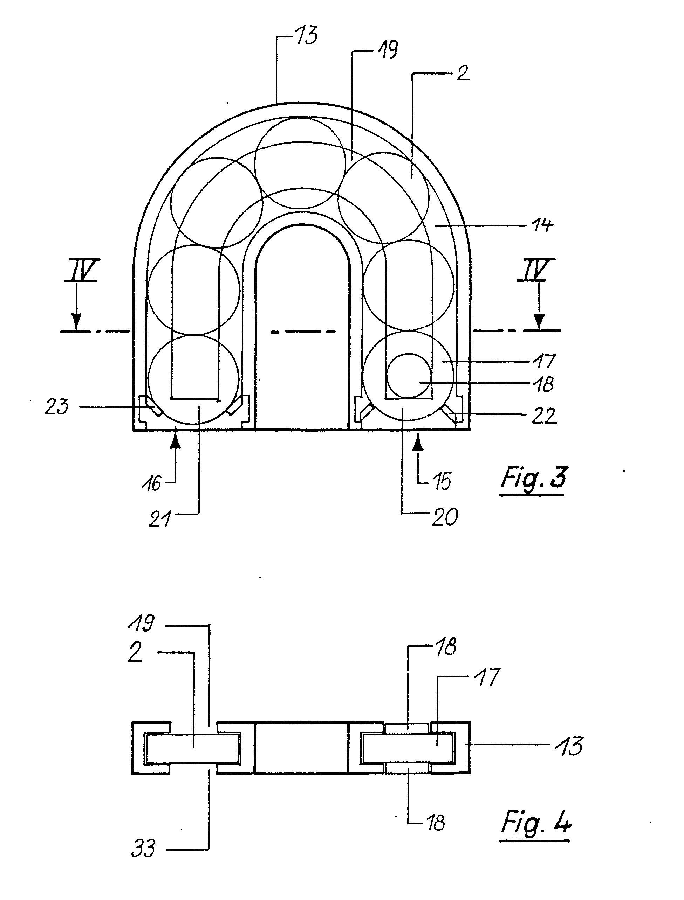

Der in Fig. 3 dargestellte Vorratsbehälter 13 unterscheidet sich von dem Vorratsbehälter 1 gemäß Fig. 1, 2 dadurch, daß der Kanal 14 U-förmig gebogen ist, so daß der Eingang 15 und der Ausgang 16 in einer Ebene nebeneinander liegen.

Der Schieber 17 ist wie eine Knopfbatterie 2 gestaltet, weist jedoch einen axialen Vorsprung 18 kleineren Durchmessers auf, der in einer oberhalb des Kanals 14 angeordneten Führung 19 gleitet. Die dem Eingang 15 und dem Ausgang 16 benachbarten Teile der Führung 19 sind durch Anschläge 20, 21 verschlossen, so daß der Schieber 17 nicht aus dem Kanal 14 austreten kann. Die federnden Zungen 22 am Eingang 15 und die federnden Zungen 23 am Ausgang 16 des Kanals 14 wirken in der gleichen Weise wie die im Zusammenhang mit den Fig. 1, 2 beschriebenen.

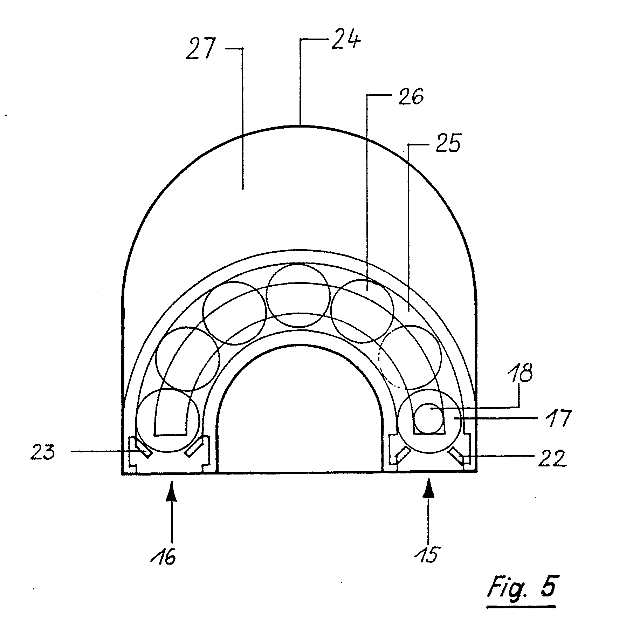

Bei dem Vorratsbehälter 24 gemäß Fig. 5 läßt sich die gleiche Anzahl Knopfbatterien 26 in einem halbkreisförmig gebogenen Kanal 25 unterbringen, da der Durchmesser der Knopfbatterien 26 kleiner ist als im Beispiel der Fig. 1 bis 4. Im übrigen ist der Vorratsbehälter gemäß Fig. 5 gleich aufgebaut, weist jedoch ein Füllstück 27 auf, so daß er die gleiche Größe wie der Vorratsbehälter gemäß Fig. 3 ergibt.

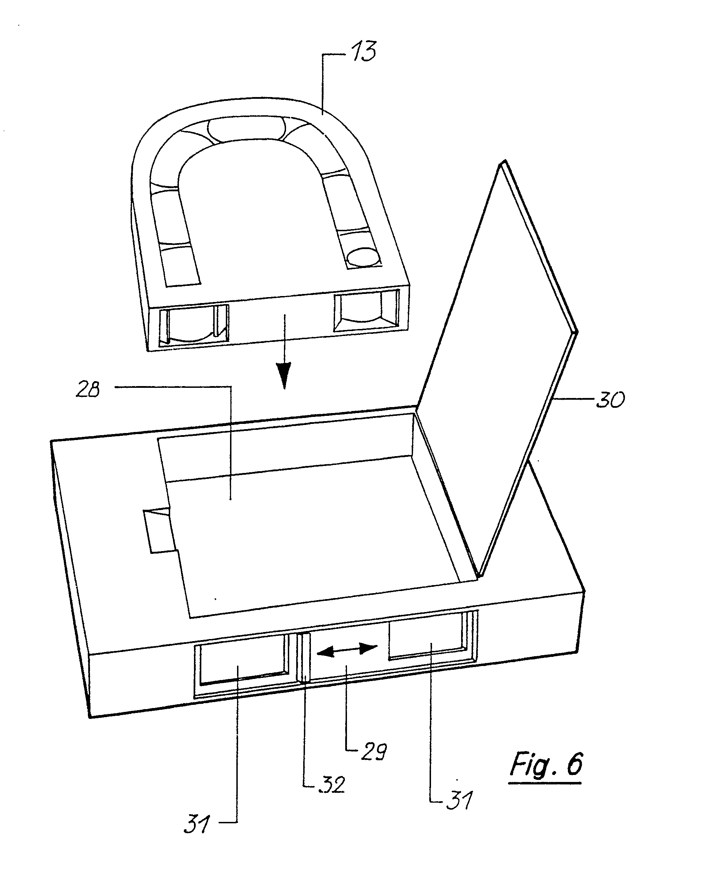

Dies führt dazu, daß die Vorratsbehälter 13 gemäß Fig. 3 und 24 gemäß Fig. 5 in ein in Fig. 6 dargestelltes Batteriespenderetui 28 eingelegt werden können. Zu diesem Zweck weist das Etui 28 an einer Breitseite eine Klappe 30 auf. Der Vorratsbehälter 13 oder 24 läßt sich daher in das Batteriespenderetui 28 wie in einen Kassettenbehälter einlegen. Der Eingang 15 und der Ausgang 16 eines Vorratsbehälters 13 sind im Batteriespenderetui 28 so angeordnet, daß sie entsprechenden Fenstern 31 in einem Schieberverschluß 29 gegenüberliegen. Mittels einer Handhabe 32 läßt sich der Verschluß 29 so verschieben, daß der Eingang 15 und der Ausgang 16 verschlossen sind und die Knopfbatterien völlig geschützt im Batteriespenderetui 28 liegen.

Um den Ladungszustand der Batterien prüfen zu können, besitzt der Vorratsbehälter einen der Führung 19 gegenüberliegenden Schlitz 33; durch die Führung 19 und den Schlitz 33 sind dann beide Pole zugänglich.


## Ansprüche

1. Vorratsbehälter für Knopfbatterien, insbesondere für Hörgerätebatterien, gekennzeichnet durch mindestens einen, dem Querschnitt der Knopfbatterien (2, 26) angepaßten, einen Eingang (4, 15) und einen Ausgang (5, 16) aufweisenden Kanal (3, 14, 25) und eine ein Durchschieben einer bestimmten Anzahl von Knopfbatterien (2, 26) nur in Ausgangsrichtung gestattende Sperre (9, 10, 22, 23).

2. Vorratsbehälter nach Anspruch 1, gekennzeichnet durch einen gegen ein Herausschieben durch Anschläge (7, 8, 20, 21) am Eingang (4, 15) und am Ausgang (5, 16) gesicherten Schieber (6, 17) im Kanal (3, 14, 25).

3. Vorratsbehälter nach Anspruch 1 oder 2, gekennzeichnet durch einen gerade verlaufenden Kanal (3).

4. Vorratsbehälter nach Anspruch 1 oder 2, gekennzeichnet durch einen U-förmigen Kanal (14, 25).

5. Vorratsbehälter nach einem der Ansprüche 1 bis 4, gekennzeichnet durch mindestens zwei parallel zueinander angeordnete Kanäle (3, 14, 25).

6. Vorratsbehälter nach einem der Ansprüche 2 bis 5, dadurch gekennzeichnet , daß der Schieber (6, 17) in entsprechende Führungen (12, 19) im Kanal (3, 14, 25) eingreifende Vorsprünge (11, 18) aufweist und die Führungen (12, 19) am Eingang (4, 15) und am Ausgang (5, 16) durch die Anschläge (7, 8, 20, 21) abgeschlossen sind.

7. Vorratsbehälter nach einem oder mehreren der Ansprüche 1 bis 6, dadurch gekennzeichnet , daß die Sperre aus in den Kanal (3, 14, 25) hineinragenden federnden Zungen (9, 10, 22, 23) bestehen.

8. Vorratsbehälter nach Anspruch 7, dadurch gekennzeichnet , daß die federnden Zungen (9, 10, 22, 23) aus demselben Material wie der Vorratsbehälter (1, 13, 24) bestehen.

9. Vorratsbehälter nach Anspruch 7 oder 8, dadurch gekennzeichnet , daß die federnden Zungen (9, 10, 22, 23) in Schieberichtung schräg nach innen in den Kanal (3, 14, 25) gerichtet sind.

10. Vorratsbehälter nach Anspruch 9, dadurch gekennzeichnet , daß zumindest die Zungen (9, 22) am Eingang (4, 15) in den Seitenwänden des Kanals (3, 14) angeordnet und auf den Mittelpunkt der letzten eingeschobenen Knopfbatterie (2, 26) gerichtet sind.

11. Vorrichtung nach einem oder mehreren der Ansprüche 1 bis 10, gekennzeichnet durch jeweils einen Schlitz (19, 33) im Bereich der Batteriepole.

12. Batteriespenderetui für mindestens einen Vorratsbehälter nach einem der Ansprüche 1 bis 11, gekennzeichnet durch mindestens einen Schieberverschluß (29) für jeden Eingang (4, 15) und jeden Ausgang (5, 16).

13. Batteriespenderetui nach Anspruch 12, gekennzeichnet durch eine Klappe (30) an einer der großen Oberflächen zum Einlegen eines Vorratsbehälters (13, 24) mit U-förmigem Kanal (14, 25) und einen, den Eingang (15) und den Ausgang (16) des Kanals (14, 25) gleichzeitig freigebenden oder ver-schließenden Schieberverschluß (29).

Fig. 1

Fig. 2

_Fig. 3_

_Fig. 4_

*Fig. 5*

*Fig. 6*